**Europäisches Patentamt**

**European Patent Office**

**Office européen des brevets**

(11) Veröffentlichungsnummer: **0 048 799**
A1

# (12) EUROPÄISCHE PATENTANMELDUNG

(21) Anmeldenummer: **81105763.7**

(22) Anmeldetag: **22.07.81**

(51) Int. Cl.³: **B 64 C 27/43**

(30) Priorität: **25.09.80 DE 3036093**

(43) Veröffentlichungstag der Anmeldung: **07.04.82**
**Patentblatt 82/14**

(84) Benannte Vertragsstaaten: **FR GB IT**

(71) Anmelder: **Messerschmitt-Bölkow-Blohm Gesellschaft mit beschränkter Haftung München, Robert-Koch-Strasse, D-8012 Ottobrunn (DE)**

(72) Erfinder: **Stephan, Michael, Dipl.-Ing., Aurikelstrasse 6, D-8012 Ottobrunn (DE)**
Erfinder: **Mautz, Karlheinz, Brennerstrasse 13, D-8012 Ottobrunn (DE)**
Erfinder: **Schwarz, Alois, Dipl.-Ing., Ahornweg 21, D-8011 Putzbrunn (DE)**

(54) **Rotor eines Drehflügelflugzeugs.**

(57) Die Erfindung bezieht sich auf einen Rotor, insbesondere eines Drehflügelflugzeugs, mit am Rotorkopf (1) an steifen Blatthalterungen gelenk- und lagerlos angeschlossenen Rotorblättern (3) jeweils über einen wenigstens für die Blattanstellwinkelbewegungen torsionsweichen Blatthalsabschnitt (3.2) zwischen dem Blattflügel (3.3) und der gegenüber der zugeordneten Blatthalterung unbeweglichen Blattwurzel (3.1). Dabei. erfolgt die Blattanstellwinkelsteuerung mittels einer Steuerstange (5) über eine, in torsionssteifer Verbindung mit dem Blattflügel (3.3), längs des Blatthalsabschnittes (3.2) berührungsfrei sich erstreckende torsionssteife Hülle (7).

Um bei diesem Rotor trotz der unbeweglichen Befestigung der einzelnen Blattwurzel (3.1) an der zugeordneten Blatthalterung für die Anstellwinkelsteuerung des Rotorblattes (3) die Steuerstange (5) im Rotorkopf (1) bzw. in dessen Rotornabe unterbringen zu können, ist mittels der Steuerstange (5) eine in die in Form eines Rotorarmes (2) ausgebildete Blatthalterung eingeführte, zur Blattwinkelachse koaxiale Steuerwelle (8) drehwinkelbewegbar und hiermit die Hülle (7) über mindestens einen aus der Blatthalterung in Querrichtung herausragenden, um die Blattwinkelachse schwenkbaren Steuerhebel (11) mit einem in Hebelschwenkrichtung biegesteifen Bindeglied (12) zur Hülle drehwinkelbewegbar.

MESSERSCHMITT-BÖLKOWBLOHM          Ottobrunn, 17. Sept. 1980
        GESELLSCHAFT                 BT01 Hb/th
MIT BESCHRÄNKTER HAFTUNG,           8799
            MÜNCHEN


Rotor eines Drehflügelflugzeugs


Die Erfindung betrifft einen Rotor gemäß dem Oberbegriff des
Patentanspruchs 1.


Ein derartiger Rotor, beispielsweise gemäß der DE-OS 27 58 086,
ist wegen des Verzichts auf gesonderte mechanische Blattlager
und -gelenke nicht nur relativ einfach im Aufbau bzw. von
entsprechend geringerem Baugewicht, sondern auch für Verschleißschäden weniger anfällig als herkömmliche Rotoren.
Hinsichtlich des geringeren Schadensrisikos empfiehlt sich
dessen weitere Ausgestaltung mit einer unter demselben Kriterium als ein Schutzgehäuse für die Blattsteuerung ausgebildeten Rotornabe beispielsweise gemäß der DE-OS 26 58 828. Solcher Rotorgestaltung steht jedoch entgegen, daß jene sogenannte (im Rotorkopf) integrierte Blattsteuerung bisher für das
Verbinden von Steuerstange und Rotorblatt einen drehwinkelbeweglichen Sitz der Blattwurzel in der zugehörigen Blatthalterung bedingt.


Der Erfindung liegt die Aufgabe zugrunde, bei einem Rotor
der eingangs genannten Art trotz der unbeweglichen Anordnung
der einzelnen Blattwurzel gegenüber der zugeordneten Blatthalterung für die Anstellwinkelsteuerung des betreffenden Rotorblattes eine im Rotorkopf bzw. in dessen Rotornabe untergebrachte Steuerstange verwenden zu können.

Diese Aufgabe ist gemäß dem Kennzeichen des Patentanspruchs 1 gelöst. Hiernach ist im Vergleich zur Rotorgestaltung der DE-OS 26 58 828 die Erfindung nicht bloß, unter Beibehaltung eines Rotorkopfes mit radial nach außen gerichteten Rotorarmen, in der Bereitstellung einer Steuerwelle je Steuerstange als Ersatz für die sonst zum direkten steuernden Eingriff letzterer verfügbare drehwinkelbewegbare Blattwurzel zu sehen. Vielmehr wird Kraftschluß zwischen dieser Steuerwelle und der für die Anstellwinkelsteuerung des Blattflügels bestimmten torsionssteifen Hülle in der Weise hergestellt, daß zugleich der von dem eingangs genannten Rotor (DE-OS 27 58 086) erfüllbaren Forderung nach einer Faltmöglichkeit des betreffenden Rotorblattes nachgekommen werden kann. Hierzu braucht nämlich im (aus Gründen einer einfachen Bauweise) bevorzugten Falle einer Blatthalterung in Form einer Gabel mit mindestens zwei von Gabelschenkel zu Gabelschenkel die zwischengefügte Blattwurzel durchquerenden Bolzen, von denen einer als die Blattwinkelachse kreuzender Bolzen zugleich eine Achse für das Schwenken des Rotorblattes in eine Faltlage bilden kann, bloß gemäß Anspruch 3 in achsparalleler Anordnung zu diesem Achsbolzen der jeweilige Steuerhebel den betreffenden Gabelschenkel zu durchqueren und am zugeordneten Bindeglied (zur torsionssteifen Hülle) über ein Gabelgelenk mit einem zum Achsbolzen koaxialen Gelenkbolzen angeschlossen zu sein. Damit ist mit der Hülle das Bindeglied ohne Entkopplung vom zugehörigen Steuerhebel um den Gelenkbolzen schwenkbar, sobald das Rotorblatt bzw. die Blattwurzel um den Achsbolzen in die gewünschte Faltlage bewegt wird.

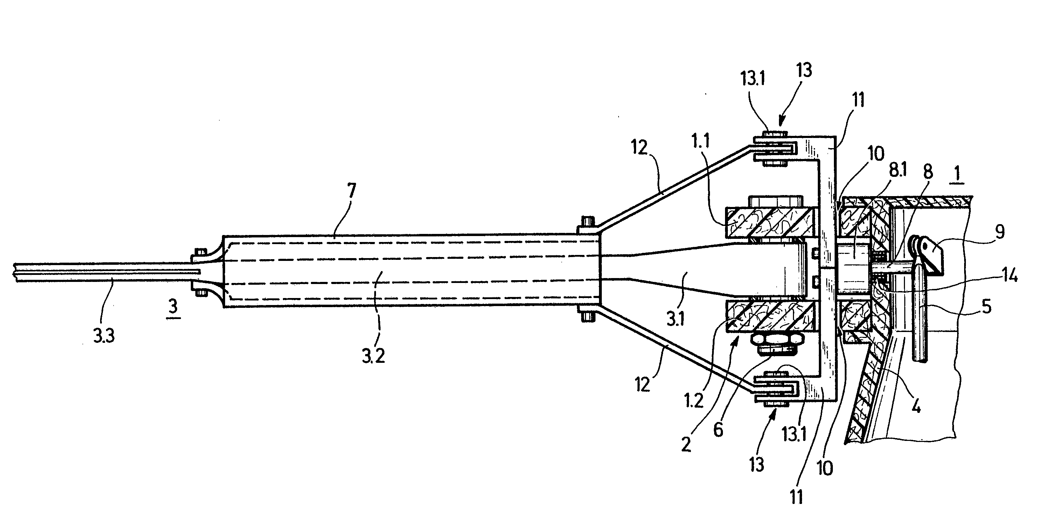

Weitere Ausgestaltungen werden nachfolgend anhand eines Ausführungsbeispiels der Erfindung erläutert. Hierzu zeigt die Zeichnung von einem Rotor (eines Drehflügelflugzeugs) in der Seitenansicht, teils geschnitten, bloß einen Ausschnitt des Rotorkopfes 1 mit einem seiner gabelförmigen Rotorarme 2 in Verbindung mit einem auch nur zum Teil dargestellten Rotorblatt 3. Der Rotorkopf 1 entspricht im Aufbau beispielsweise dem sogenannten zentralen Kopfteil gemäß der DE-OS 27 12 706 mit dem Unterschied, daß für die die Rotorarme 2 bildenden Platten 1.1, 1.2 ein mit der nicht dargestellten Rotorantriebswelle umlaufendes Nabengehäuse 4 die Basis bildet, in welchem für die Blattanstellwinkelsteuerung maßgebende Mittel untergebracht sind. Hiervon ist bloß die Steuerstange 5 eines Steuergestänges dargestellt, welches mit demjenigen gemäß der DE-OS 26 58 828 übereinstimmen kann.

Das Rotorblatt 3, beispielsweise aus faserverstärktem Kunststoff, ist über seine Blattwurzel 3.1 am Rotorarm 2 mittels zweier Bolzen 6 angeschlossen, von denen bloß der in achsparalleler Anordnung zur Rotordrehachse die Blattwinkelachse kreuzende Bolzen ersichtlich ist. Dieser Bolzen 6 hat (im Stillstand des Rotors) zugleich die Funktion eines Achsbolzens für das Schwenken des Rotorblattes 3 in eine Faltlage in der Rotordrehebene, wozu selbstverständlich zuvor der zweite nicht ersichtliche Anschlußbolzen gezogen sein muß.

Um bei diesem im Rotorbetrieb unbeweglichen (Bolzen-)Anschluß der Blattwurzel 3.1 am Rotorarm 2 dennoch sicherzustellen, daß das Rotorblatt 3 bzw. sein Blattflügel 3.3 Blattanstellwinkelbewegungen ausführen kann, ist der Blatthalsabschnitt 3.2 torsionsweich ausgebildet; ein derartiges Rotorblatt ist beispielsweise durch die DE-AS 28 06 119 bekannt. Der demnach gewählte sogenannte gelenk- und lagerlose Blattanschluß bedingt für die Blattanstellwinkelsteuerung zum einen, wie schon bei dem Rotor gemäß der eingangs genannten DE-OS 27 58 086, eine torsionssteife Hülle 7, welche, in torsionssteifer Verbindung mit dem Blattflügel 3.3, sich längs des Blatthalsabschnittes 3.2 berührungsfrei bis zur Blattwurzel 3.1 erstreckt. Zum anderen ist, da - im Gegensatz zu dem bekannten Rotor - kein unmittelbarer Angriff der Steuerstange 5 an der Hülle 7 möglich ist, aus dem Nabengehäuse 4 in den Rotorarm 2 eine Steuerwelle 8 drehwinkelbewegbar eingeführt, und zwar in koaxialer Anordnung zur Blattwinkelachse. Die Steuerwelle 8 steht einerseits über einen Hebel 9 mit der über eine nicht dargestellte Taumelscheibe längsverschiebbaren Steuerstange 5 in Verbindung. Andererseits sind an einem Flansch 8.1 der Steuerwelle 8 zwei über Querschlitze 10 aus dem Rotorarm 2 in Querrichtung herausragende Steuerhebel 11 angeschlosen, welche ihrerseits jeweils über ein in Hebelschwenkrichtung biegesteifes Bindeglied 12 mit der Hülle 7 in Verbindung stehen. Hierbei durchquert (in der Ruhelage) der jeweilige Steuerhebel 11 den betreffenden Gabelschenkel des Rotorarmes 2 in achsparalleler Anordnung zu dem vorgenannten als Achsbolzen fungierenden Anschlußbolzen 6 der Blattwurzel 3.1, so daß die Gelenkbolzen 13.1 von zwischen den Steuerhebeln 11 und Bindegliedern 12 vorgesehenen Gabelgelenken 13 koaxial zu jenem Achsbolzen (6) zu liegen kommen und somit ohne Entkopplung dieser Gelenkverbindung der vorerwähnte Faltvorgang für das Rotorblatt 3 durchführbar ist.

Selbstverständlich ist das Durchqueren der Gabelschenkel des Rotorarmes 2 durch die Steuerhebel 11 allein bedingt durch die gewählte Gelenkverbindung (mit den Bindegliedern 12) unter dem Kriterium geringstmöglichen Demontageaufwandes für den Faltvorgang. Im übrigen ist es nicht bindend, die Steuerhebel 11 paarweise zu verwenden, was allerdings den Vorteil hat, daß, unter Drehwinkelbewegung der Steuerwelle 8, querkraftfrei ein reines Steuertorsionsmoment auf die Hülle 7 übertragen wird. Auch ist die Erfindung auf
einen Rotorkopf mit Rotorarmen 2 in Gabelform nicht beschränkt. Zur Steuerwelle 8 bzw. ihrer Lagerung im Nabengehäuse 4 ist schließlich zu bemerken, daß hierfür ein (Radial-)Elastomerlager 14 gewählt worden ist unter dem Aspekt,
dieses zugleich als Dichtung zwischen der Steuerwelle und
der Wandung des u.U. mit Getriebeöl gefüllten Nabengehäuses
nutzen können.

MESSERSCHMITT-BÖLKOW-BLOHM          Ottobrunn, 17. Sept. 1980
             GESELLSCHAFT                    BT01 Hb/th
MIT  BESCHRÄNKTER  HAFTUNG,                  8799
               MÜNCHEN

Rotor eines Drehflügelflugzeugs

P a t e n t a n s p r ü c h e

1.  Rotor, insbesondere eines Drehflügelflugzeugs, mit am
    Rotorkopf an steifen Blatthalterungen gelenk- und lagerlos
    angeschlossenen Rotorblättern jeweils über einen wenigstens für die Blattanstellwinkelbewegungen torsionsweichen
    Blatthalsabschnitt zwischen dem Blattflügel und der gegenüber der zugeordneten Blatthalterung unbeweglichen Blattwurzel, wobei die Blättanstellwinkelsteuerung mittels einer
    Steuerstange über eine, in torsionssteifer Verbindung mit
    dem Blattflügel, längs des Blatthalsabschnittes berührungsfrei sich erstreckende torsionssteife Hülle erfolgt, dadurch
    g e k e n n z e i c h n e t , daß mittels der im Rotorkopf (1) bzw. in der Rotornabe angeordneten Steuerstange
    (5) eine in die in Form eines Rotorarmes (2) ausgebildete
    Blatthalterung eingeführte, zur Blattwinkelachse koaxiale
    Steuerwelle (8) drehwinkelbewegbar und hiermit die Hülle
    (7) über mindestens einen aus der Blatthalterung in Querrichtung herausragenden, um die Blattwinkelachse schwenkbaren Steuerhebel (11) mit einem in Hebelschwenkrichtung
    biegesteifen Bindeglied (12) zur Hülle drehwinkelbewegbar
    ist.

- 2 -

2. Rotor nach Anspruch 1, dadurch g e k e n n -
z e i c h n e t , daß mittels der Steuerwelle (8) paarweise einander gegenüberstehende Steuerhebel (11) gemeinsam
schwenkbar sind.

3. Rotor nach Anspruch 1 oder 2 mit Blatthalterungen jeweils
in Form einer Gabel mit mindestens zwei von Gabelschenkel
zu Gabelschenkel die zwischengefügte Blattwurzel durchquerenden Bolzen, von denen einer als die Blattwinkelachse kreuzender Bolzen zugleich eine Achse für das Schwenken des Rotorblattes in eine Faltlage bildet, dadurch
g e k e n n z e i c h n e t , daß in achsparalleler
Anordnung zu diesem Achsbolzen (6) der jeweilige Steuerhebel (11) den betreffenden Gabelschenkel durchquert und
am zugeordneten Bindeglied (12) über ein Gabelgelenk
(13) mit einem zum Achsbolzen koaxialen Gelenkbolzen
(13.1) angeschlossen ist.

4. Rotor nach Anspruch 3, dadurch g e k e n n -
z e i c h n e t , daß der einzelne Gabelschenkel mit
einem Querschlitz (10) für den betreffenden Steuerhebel
(11) versehen ist.

5. Rotor nach Anspruch 1, dadurch g e k e n n -
z e i c h n e t , daß die Steuerwelle (8) im Übergang
von der Rotornabe (Nabengehäuse 4) zur Blatthalterung
(Rotorarm 2) in einem Elastomerlager (14) sitzt.

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.3) |
|---|---|---|---|
| | DE - A - 1 456 055 (LOCKHEED) <br> * Seite 9, Absatz 3 bis Seite 10, Absatz 1, Seiten 13,14, vollständig; Figuren 1-15 * | 1 | B 64 C 27/43 |
| D | DE - A - 2 758 086 (MESSERSCHMITT BOLKOW..) <br> * Seite 18, Absatz 2; Figuren 1-5 * | 1 | |
| D | DE - A - 2 712 706 (MESSERSCHMITT BOLKOW...) <br> * Seite 7, Zeilen 9-32; Figuren 1-3 * | 1,2,3, 5 | **RECHERCHIERTE SACHGEBIETE (Int. Cl.3)** <br><br> B 64 C |
| | US - A - 3 308 888 (ARCIDIACONO) <br> * Spalte 2, Zeile 38 bis Spalte 3, Zeile 30; Figur * | 2,3 | |
| | US - A - 2 755 866 (APOSTOLESCU) <br> * Spalte 4, Zeile 53 bis Spalte 5, Zeile 16; Figuren 3-7 * | 1,2 | |
| | US - A - 1 749 471 (DE BOTHEZAT) <br> * Seite 2, Zeilen 25-39; Figuren 7-13 * | 4 | |
| A | US - A - 3 347 320 (CRESAP) | | |
| A | US - A - 3 625 631 (COVINGTON) | | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22-12-1981 | KIESLINGER |